# EUROPEAN PATENT SPECIFICATION

(11) **EP 3 489 102 B1**
(45) Date of publication and mention of the grant of the patent: **25.03.2020**
(21) Application number: 17203236.9
(22) Date of filing: 23.11.2017
(51) Int. Cl.: B60T 17/08

(54) **COUPLING STRUCTURE OF A PUSH-ROD GUIDE AND A PUSH-ROD GUIDE COVER FOR A BRAKE CHAMBER FOR A VEHICLE**
KUPPLUNGSSTRUKTUR EINER SCHUBSTANGENFÜHRUNG UND EINER SCHUBSTANGENFÜHRUNGSABDECKUNG FÜR EINE BREMSKAMMER FÜR EIN FAHRZEUG
STRUCTURE D'ACOUPPLEMENT D'UNE GUIDE DE TIGE POUSSOIR ET D'UN COUVERCLE DE GUIDE DE TIGE POUSSOIR POUR UNE CHAMBRE DE FREINAGE POUR VÉHICULE

(43) Date of publication of application: 29.05.2019
(73) Proprietor: Miraevc Co., Ltd., Joellabuk-do 54368 (KR)
(72) Inventor: LEE, Seung Hoon, 54961 Jeollabuk-do (KR)
(74) Representative: Margotti, Herwig Franz

(56) References cited:
- CN-Y- 2 617 950
- US-A1- 2007 131 498

## Description

### [Technical Field]

This disclosure relates to a coupling structure of a push-rod guide and a push-rod guide cover of a brake chamber for a vehicle, and more particularly, to a coupling structure of a push-rod guide and a push-rod guide cover of a brake chamber for a vehicle, which guides a push-rod vertically moving in a bottom housing.

### [Background Art]

For large vehicles such as buses, trucks, trailers and other heavy equipment, the brake operation is performed sensitively and quickly during highspeed driving or parking, and a pneumatic spring brake chamber for a vehicle with excellent braking performance is used.

For such a brake chamber for a vehicle, Korean Patent No. 10-1567709 discloses a brake actuator. The vehicle brake chamber includes a hollow head housing, an adapter housing and a bottom housing, which are provided in order from the top. Meanwhile, a piston is disposed between the head housing and the adapter housing, and a hollow actuator rod coupled to the piston is disposed through a hole of the adapter housing. A diaphragm is disposed between the adapter housing and the bottom housing. Also, a pressure plate for supporting the diaphragm and a push-rod for supporting the pressure plate are provided, and the push-rod is disposed through a hole formed in the bottom housing.

By using this structure, the space formed between the head housing and the piston serves as a spring chamber, and a spring is disposed therebetween. The space prepared between the piston and adapter housing serves as a pressure chamber. The space formed between the adapter housing and the diaphragm serves as a service chamber, and a push-rod chamber is formed between the diaphragm and the bottom housing.

As described above, the brake chamber for a vehicle includes the spring chamber, the pressure chamber, the service chamber and the push-rod chamber, provided from the top to the bottom. Also, the pressure plate moves up and down by adjusting an elastic force of a spring and an air pressure in the service chamber, so that the push-rod connected through a lower end of the bottom housing is moved to enable the brake operation while the vehicle is running or stopping.

At this time, when the push-rod moves up and down, a push-rod guide for guiding the movement of the push-rod is disposed on at bottom surface of the bottom housing. In the existing technique, a push-rod guide is produced separately and then coupled to a push-rod by using a coupling member. However, if the push-rod guide is assembled by using a fixing member, it is difficult to secure a firm coupling strength in the bottom housing, and it is additionally needed to fix the push-rod guide in order to assemble the coupling member, which may deteriorate the production process.

Document US 2007/0131498 A1 discloses a spring brake chamber assembly with a push-rod guide.

Document CN 2 617 950 Y discloses a spring brake assembly with a coupling structure comprising a push-rod guide and a push-rod cover.

### [Disclosure]

### [Technical Problem]

This disclosure is directed to providing a coupling structure of a push-rod guide and a push-rod guide cover of a brake chamber for a vehicle, which may form the push-rod guide integrally to be simply coupled to a side of a push-rod and firmly fix the push-rod guide to a bottom surface of a bottom housing by using a push-rod guide cover.

### [Technical Solution]

In one general aspect, there is provided a coupling structure of a push-rod guide and a push-rod guide cover of a brake chamber for a vehicle, which comprises a head housing, a bottom housing, an adaptor housing provided between the head housing and the bottom housing to connect the head housing and the bottom housing, a diaphragm fixed between the adaptor housing and the bottom housing to divide a space between the adaptor housing and the bottom housing, a push-rod configured to support a bottom surface of the diaphragm and move along a push-rod hole formed in a bottom surface of the bottom housing, a yoke connected to an end of the push-rod, and a return spring disposed between the push-rod and the bottom housing, wherein after the push-rod and the yoke are inserted into the hole, the push-rod guide is assembled to an axial side of the push-rod at the inside of the bottom housing, and the push-rod guide cover is coupled to the push-rod guide and supported by the return spring to fix the push-rod guide, wherein the push-rod guide includes a pair of half members having a semicircular plate shape and connected by a hinge to be assembled at the axial side of the push-rod to form a circular plate shape, and the push-rod guide has a push-rod opening formed at a center of the circular plate to guide movement of the push-rod, and wherein a protrusion protruding upwards is provided at a center of the push-rod guide to form a step in a radial direction of the push-rod guide, and an accommodation groove corresponding to the step is formed at an inner circumference of the push-rod guide cover.

Here, the push-rod guide may be made of plastic material, and one ends of the pair of half members may be integrally injection-molded to form the hinge.

### [Advantageous Effects]

If the coupling structure of a push-rod guide and a push-rod guide cover of a brake chamber for a vehicle according to the present disclosure is used, since a pair of half members pivot about a hinge shaft, the push-rod guide may be simply coupled to a side of the push-rod. In addition, since the push-rod guide is inserted and fixed in an accommodation groove formed in the push-rod guide cover, it is possible to maintain a firm coupling strength and improve the production efficiency without any separate coupling member.

### [Description of Drawings]

FIG. 1 is a diagram showing a pneumatic spring brake chamber for a vehicle.
FIG. 2 is an exploded perspective view showing that a push-rod guide and a push-rod guide cover are being coupled to a bottom housing according to an embodiment of the present disclosure.
FIG. 3 is a cross-sectioned view showing that the push-rod guide and the push-rod guide cover are coupled to the bottom housing according to an embodiment of the present disclosure.
FIG. 4 is a plane view showing that the push-rod guide and the push-rod guide cover are coupled according to an embodiment of the present disclosure.

### [Best Mode]

Hereinafter, an embodiment of the present disclosure will be described in detail with reference to the accompanying drawings. At this time, it should be noted that like components are denoted by like reference signs as possible. In addition, any known functions and configurations that may obscure the essence of the present disclosure will not be explained. For the same reason, some components in the accompanying drawings are exaggerated, omitted or schematically shown.

In addition, throughout the specification, when any component is referred to as including another component, it means that the component can include other components further, instead of excluding other components, unless specifically stated otherwise. In addition, throughout the specification, the term "on ..." means to be located above or below a corresponding portion, and does not necessarily mean that the component is located at an upper side based on the gravitational direction.

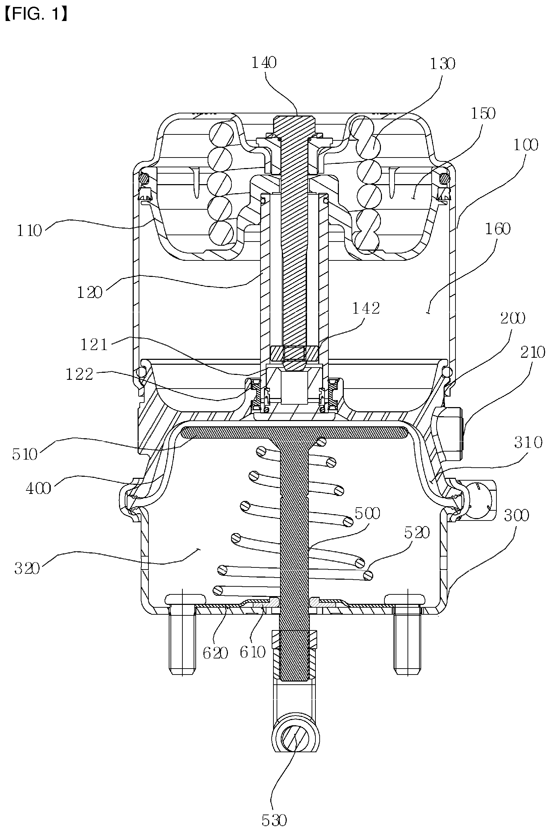

FIG. 1 is a diagram showing a pneumatic spring brake chamber for a vehicle.

First, referring to FIG. 1, a brake chamber for a vehicle will be described. In a pneumatic spring brake chamber for a vehicle, the air flow between a spring chamber 150 and a service chamber 310 is performed by means of a hollow actuator rod 120 disposed between the spring chamber 150 and the service chamber 310 and an actuator rod valve 121 coupled to a lower end of the actuator rod 120.

The pneumatic spring brake chamber for a vehicle includes a hollow head housing 100, an adapter housing 200 and a bottom housing 300, arranged in order from the top. A piston 110 is disposed between the head housing 100 and the adapter housing 200, and a diaphragm 400 is disposed between the adapter housing 200 and the bottom housing 300.

Meanwhile, the actuator rod 120 having a hole formed through the adapter housing 200 is disposed below a piston hole formed in the piston 110, and a rod valve 121 is disposed at an end of the actuator rod 120. The rod valve 121 may allow the spring chamber 150 and the service chamber 310 to communicate with each other and thus allow air flow therebetween. In this embodiment, the piston 110 and the actuator rod 120 are formed separately but may be integrally formed with each other.

In the pneumatic spring brake chamber for a vehicle, the spring chamber 150 is formed between the head housing 100 and the piston 110, and a pressure chamber 160 is formed between the piston 110 and the adapter housing 200. In addition, the service chamber 310 is formed between the adapter housing 200 and the diaphragm 400, and a push-rod chamber 320 is formed between the diaphragm 400 and the bottom housing 300.

A compression spring 130 disposed in the spring chamber 150 is a coil spring, and the outer diameter of the coil may be gradually decreased from the center of the coil toward the both ends thereof. At this time, one end of the compression spring 130 is supported in contact with the piston 110, and the other end of the compression spring 130 is supported in contact with a bent portion of the head housing 100.

Meanwhile, the bent portion is formed at the upper end of the head housing 100 along an inner side of the head housing 100, and the bent portion prevents the compression spring 130 from moving at the upper portion so that the compression spring 130 is compressed while always maintaining a constant center axis.

The piston 110 is in close contact with the inside of the head housing 100 to separate the inner space of the head housing 100 into the spring chamber 150 and the pressure chamber 160. The hollow actuator rod 120 is disposed in one direction along the piston hole. Thus, one end of the actuator rod 120 may be connected to the piston 110, and the other end may be supported on the diaphragm 400 through the hole of the adapter housing 200.

A lip seal 122 is disposed at a portion where the outer circumference of the actuator rod 120 and the inner circumference of the adapter housing 200 are in contact with each other to prevent fluid leakage.

A casing bolt 140 having one end fixed to a head housing hole of the head housing 100 and disposed through the adapter housing 300 and a casing nut 142 having the other end screwed to the casing bolt 140 are disposed inside the hollow actuator rod 120.

The adapter housing 200 is disposed between the head housing 100 and the bottom housing 300 to connect the head housing 100 and the bottom housing 300 to each other. The adapter housing 200 has a hole at a center thereof, and the actuator rod 120 is supported in contact with the diaphragm 400 through the hole. The adapter housing 200 has a valve structure 210 at one side thereof to introduce air pressure, so that air may be introduced when a parking brake is operated while the vehicle is running.

Meanwhile, the diaphragm 400 is disposed in the bottom housing 300, and the diaphragm 400 is supported in contact with a push-rod plate 510 and divides the bottom housing 300 into the service chamber 310 and the push-rod chamber 320. At this time, the push-rod plate 510 is supported by the push-rod 500 and transmits the movement of the diaphragm 400 according to the air pressure to the push-rod 500. A return spring 520 is disposed between the push-rod plate 510 and the bottom housing 300 along an axial direction of the push-rod 500 and is compressed and restored as the push-rod plate 510 moves.

In this way, the diaphragm 400 moves the push-rod plate 510 and the push-rod vertically according to the elastic force of the compression spring 130 in the spring chamber 150 and the air pressure adjustment in the pressure chamber 160, thereby operating a brake (not shown) connected to the lower end of the push-rod 500.

At this time, a push-rod guide 610 for guiding the movement of the push-rod 500 moving along the push-rod hole 330 and a push-rod guide cover 620 for fixing the push-rod guide 610 are provided at the bottom surface of the bottom housing 300. The housing 300, the push-rod and the yoke may have various shapes, and the present disclosure is not limited to any specific shape. Hereinafter, the push-rod guide 610 and the push-rod guide cover 620 will be explained in detail.

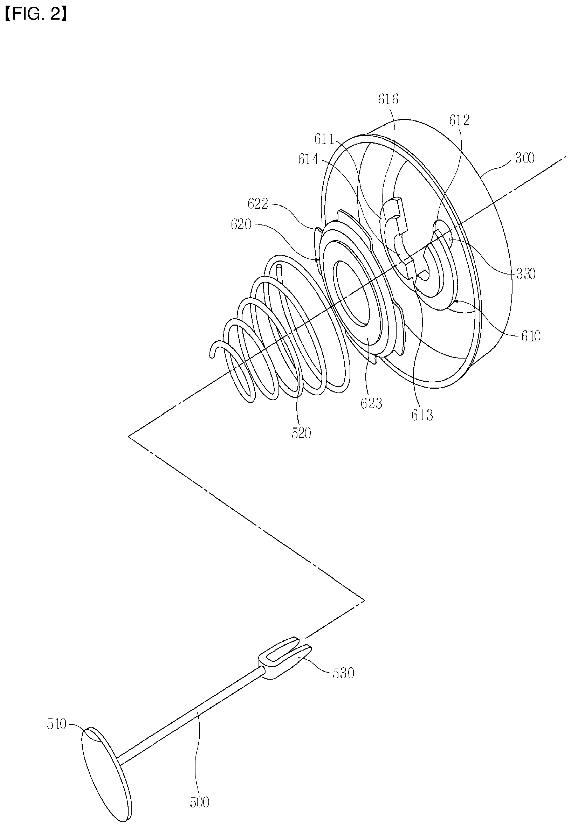

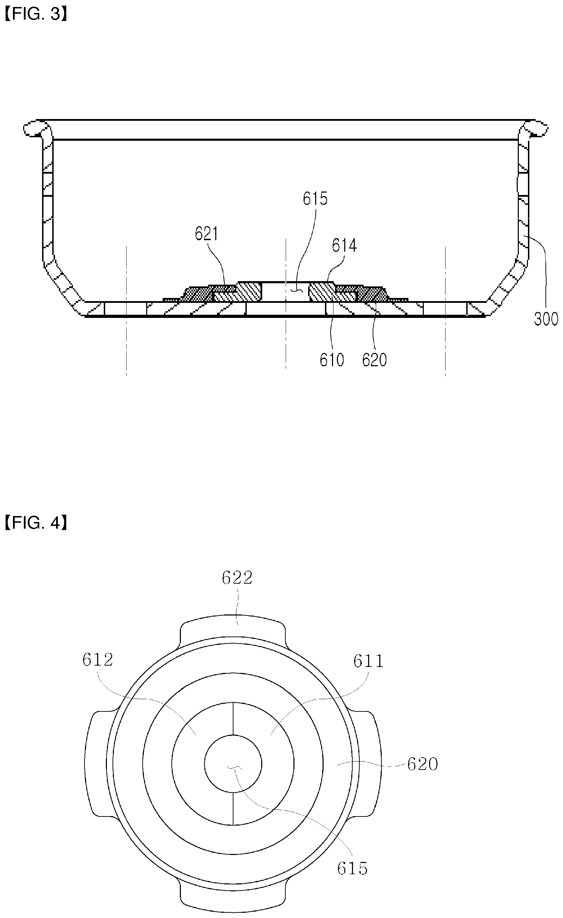

FIG. 2 is an exploded perspective view showing that a push-rod guide and a push-rod guide cover are being coupled to a bottom housing according to an embodiment of the present disclosure, FIG. 3 is a cross-sectioned view showing that the push-rod guide and the push-rod guide cover are coupled to the bottom housing according to an embodiment of the present disclosure, and FIG. 4 is a plane view showing that the push-rod guide and the push-rod guide cover are coupled according to an embodiment of the present disclosure.

Referring to FIGS. 2 to 4, the push-rod guide and the push-rod guide cover according to an embodiment of the present disclosure will be described in more detail.

The push-rod 500 has a yoke 530 at an end thereof and is inserted into the push-rod hole 330. Since the yoke 530 has a larger diameter than the push-rod 500, a gap is formed between the outer circumference of the push-rod 500 and the push-rod hole 330 in a state where the push-rod 500 is inserted into the push-rod hole 330. The push-rod guide 610 guides the movement of the push-rod 500 while sealing the gap. When the push-rod 500 is inserted into the push-rod hole 330, the return spring 520 and the push-rod guide cover 620 are inserted into the inner space of the bottom housing 300 together along an axial direction of the push-rod 500 and disposed therein.

The push-rod guide 610 is integrally formed by coupling a pair of half members 611, 612 of a semicircular plate shape by hinges. The pair of half members 611, 612 may be pivoted about a hinge shaft 613. At this time, semicircular cut portions 614 are formed in the half members 611, 612, respectively, and the semicircular cut portions 614 are adjacent to each other and coupled while facing each other to form a guide hole 615.

As described above, in a state where the push-rod 500 is inserted along the push-rod hole 330, the pair of half members 611, 612 in an opened state are engaged at the side of the push-rod 500 and pivoted to be coupled to each other, thereby forming the guide hole 615 in a closed shape. The guide hole 615 serves to guide the movement of the push-rod 500 at the bottom surface of the bottom housing 300.

Meanwhile, a protrusion 616 protruding upward is formed at a center of the push-rod guide 610 to form a step toward a radial direction of the push-rod guide 610. The protrusion 616 is coupled to an accommodation groove 621, explained later, formed in the push-rod guide cover 620.

The push-rod guide cover 620 serves to fix the push-rod guide 610 to the bottom surface of the bottom housing 300. The inner diameter of the push-rod guide cover 620 is formed so that the outer circumference of the push-rod guide 610 may be accommodated therein. At this time, the outer circumference of the push-rod guide cover 620 may be fixed by the return spring 520 disposed between the push-rod plate 510 and the bottom housing 300. Accordingly, a predetermined pressure is applied to the outer circumference of the push-rod guide cover 620 by the return spring 520, and thus it is possible to prevent the push rod guide 610 and the push-rod guide cover 620 from moving.

The push-rod guide cover 620 has the accommodation groove 621 formed at an inner circumference thereof to correspond to the step of the push-rod guide 610. The protrusion 616 formed on the push-rod guide 610 is inserted and fixed in the accommodation groove 621. Accordingly, the push-rod guide 610 is firmly fixed to the bottom surface of the bottom housing 300 without a separate coupling member such as a bolt. The push-rod guide 610 and the push-rod guide cover 620 may be made of a synthetic resin material with elasticity, and the pair of half members 611, 612 may be integrally formed by injection molding.

Meanwhile, the push-rod guide cover 620 may further include fixed wings 622 formed at the outer circumference thereof to protrude radially at intervals of at least 90 degrees. The fixed wings 622 may serve to more securely fix the push-rod guide 610 to the bottom surface of the bottom housing 300 by the return spring 520.

At this time, the outer circumference of the push-rod guide cover 620 may have a spring-fixing step 623. The spring-fixing step 623 may prevent the return spring 520 from moving in a horizontal direction by forming a step portion in a radial direction.

As described above, since the push-rod guide 610 is formed by integrally injection-molding the pair of half members 611, 612 and the pair of half members 611, 612 are pivoted about the hinge shaft 613, the push-rod guide 610 may be easily fastened at the side of the push-rod 500. In addition, since the push-rod guide 610 is inserted and fixed in the accommodation groove 621 formed in the push-rod guide cover 620, the push-rod guide 610 may maintain a firm coupling strength without a separate coupling member.

A push-rod guide of an existing technique is formed with members separated from each other, and a coupling member such as a bolt is used for coupling the separated members. In this case, it is difficult to maintain a firm coupling strength in the bottom housing with a narrow work space, and the process time is delayed since a manufacturing process is added. In addition, the coupling member may be detached due to the vibration generated during the operation of the brake. The present disclosure however is capable of solving the problems of the existing technique by using the above-described structural features.

Meanwhile, it should be understood that the present disclosure is not intended to limit the scope of the present disclosure, but it is intended merely to easily explain the technique of the present disclosure and to propose specific examples for aiding understanding of the present disclosure. It should be apparent to those skilled in the art that there are many modifications based on the technical idea of the present disclosure other than the embodiments disclosed herein, within the scope of the appended claims.

**[Reference Signs]**

| | |
|---|---|
| 100: head housing | 110: piston |
| 120: actuator rod | 130: compression spring |
| 140: casing bolt | 150: spring chamber |
| 160: pressure chamber | 200: adaptor housing |
| 300: bottom housing | 310: service chamber |
| 320: push-rod chamber | 400: diaphragm |
| 500: push-rod | 510: push-rod plate |
| 520: return spring | 530: yoke |
| 610: push-rod guide | 611, 612: half member |
| 613: hinge shaft | 614: semicircular cut portion |
| 615: guide hole | 616: protrusion |
| 620: push-rod guide cover | 621: step |
| 622: fixed wing | |

## Claims

1. A coupling structure of a push-rod guide (610) and a push-rod guide cover (620) for a brake chamber for a vehicle, said brake chamber comprises a head housing (100), a bottom housing (300), an adaptor housing (200) provided between the head housing (100) and the bottom housing (300) to connect the head housing (100) and the bottom housing (300), a diaphragm (400) fixed between the adaptor housing (200) and the bottom housing (300) to divide a space between the adaptor housing (200) and the bottom housing (300), a push-rod (500) configured to support a bottom surface of the diaphragm (400) and move along a push-rod hole (330) formed in a bottom surface of the bottom housing (300), a yoke (530) connected to an end of the push-rod (500), and a return spring (520) disposed between the push-rod (500) and the bottom housing (300), wherein after the push-rod (500) and the yoke (530) are inserted into the push-rod hole (330), the push-rod guide (610) is assembled to an axial side of the push-rod (500) at the inside of the bottom housing (300), and the push-rod guide cover (620) is coupled to the push-rod guide (610) and supported by the return spring (520) to fix the push-rod guide (610), wherein the push-rod guide (610) includes a pair of half members (611, 612) having a semicircular plate shape and connected by a hinge to be assembled at the axial side of the push-rod (500) to form a circular plate shape, and the push-rod guide (610) has a push-rod opening formed at a center of the circular plate to guide movement of the push-rod (500), and wherein a protrusion (616) protruding upwards is provided at a center of the push-rod guide (610) to form a step in a radial direction of the push-rod guide (610), and an accommodation groove (621) corresponding to the step is formed at an inner circumference of the push-rod guide cover (620).

2. The coupling structure of a push-rod guide (610) and a push-rod guide cover (620) of a brake chamber for a vehicle according to claim 1, wherein the push-rod guide (610) is made of plastic material, and one ends of the pair of half members (611, 612) are integrally injection-molded to form the hinge.

## Patentansprüche

1. Kopplungsstruktur einer Stößelstangenführung (610) und einer Stößelstangenführungsabdeckung (620) für eine Bremskammer für ein Fahrzeug, wobei die Bremskammer ein oberes Gehäuse (100), ein unteres Gehäuse (300), ein Adaptergehäuse (200), das zwischen dem oberen Gehäuse (100) und dem unteren Gehäuse (300) bereitgestellt ist, um das obere Gehäuse (100) und das untere Gehäuse (300) zu verbinden, eine Membran (400), die zwischen dem Adaptergehäuse (200) und dem unteren Gehäuse (300) befestigt ist, um einen Raum zwischen dem Adaptergehäuse (200) und dem unteren Gehäuse (300) zu trennen, eine Stößelstange (500), die konfiguriert ist, um eine untere Fläche der Membran (400) zu stützen und entlang eines Stößelstangenlochs (330) zu bewegen, das in einer Bodenfläche des unteren Gehäuses (300) ausgebildet ist, ein Joch (530), das mit einem Ende der Stößelstange (500) verbunden ist, und eine Rückstellfeder (520), die zwischen der Stößelstange (500) und dem unteren Gehäuse (300) angeordnet ist,
wobei nach der Einführung der Stößelstange (500) und des Jochs (530) in das Stößelstangenloch (330), die Stößelstangenführung (610) an einer axialen Seite der Stößelstange (500) an der Innenseite des unteren Gehäuses (300) angebracht wird und die Stößelstangenführungsabdeckung (620) mit der Stößelstangenführung (610) gekoppelt und von der Rückstellfeder (520) getragen wird, um die Stößelstangenführung (610) zu fixieren,
wobei die Stößelstangenführung (610) ein Paar Halbelemente (611, 612) mit einer halbkreisförmigen Plattenform umfasst, die durch ein Gelenk verbunden sind, das an der axialen Seite der Stößelstange (500) anzubringen ist, um eine kreisförmigen Plattenform zu bilden, und die Stößelstangenführung (610) eine Stößelstangenöffnung in der Mitte der kreisförmigen Platte aufweist, um eine Bewegung der Stößelstange (500) zu führen, und
wobei ein Vorsprung (616), der nach oben vorspringt, in der Mitte der Stößelstangenführung (610) bereitgestellt ist, um einen Schritt in einer radialen Richtung der Stößelstangenführung (610) zu bilden, und eine der Stufe entsprechende Unterbringungsrille (621) an einem Innenumfang der Stößelstangenführungsabdeckung (620) ausgebildet ist.

2. Kopplungsstruktur einer Stößelstangenführung (610) und einer Stößelstangenführungsabdeckung (620) einer Bremskammer für ein Fahrzeug nach Anspruch 1, wobei die Stößelstangenführung (610) aus einem Kunststoffmaterial besteht und die einen Enden des Paars von Halbelementen (611, 612) einstückig spritzgegossen sind, um das Gelenk zu bilden.

## Revendications

1. Structure de couplage d'un guide de tige de poussée (610) et d'un couvercle de guide de tige de poussée (620) pour une chambre de frein pour véhicule, ladite chambre de frein comprenant un boîtier de tête (100), un boîtier inférieur (300), un boîtier d'adaptateur (200) prévu entre le boîtier de tête (100) et le boîtier inférieur (300) pour connecter le boîtier de tête (100) et le boîtier inférieur (300), une membrane (400) fixée entre le boîtier d'adaptateur (200) et le boîtier inférieur (300) pour diviser un espace entre le boîtier d'adaptateur (200) et le boîtier inférieur (300), une tige de poussée (500) configurée pour supporter une surface inférieure de la membrane (400) et se déplacer le long d'un trou de tige de poussée (330) formé dans une surface inférieure du boîtier inférieur (300), un étrier (530) relié à une extrémité de la tige de poussée (500), et un ressort de rappel (520) disposé entre la tige de poussée (500) et le boîtier inférieur (300),
dans lequel, après l'insertion de la tige de poussée (500) et de l'étrier (530) dans le trou de tige de poussée (330), le guide de tige de poussée (610) est assemblé sur un côté axial de la tige de poussée (500) au niveau de l'intérieur du boîtier inférieur (300), et le couvercle de guide de tige de poussée (620) est couplé au guide de tige de poussée (610) et supporté par le ressort de rappel (520) pour fixer le guide de tige de poussée (610),
dans lequel le guide de tige de poussée (610) comprend une paire de demi-éléments (611, 612) ayant une forme de plaque semi-circulaire et reliés par une articulation pour un assemblage au niveau du côté axial de la tige de poussée (500) afin de former une forme de plaque circulaire, et le guide de tige de poussée (610) présente une ouverture de tige de poussée formée au niveau d'un centre de la plaque circulaire pour guider un déplacement de la tige de poussée (500), et
dans lequel une saillie (616) faisant saillie vers le haut est prévue au niveau d'un centre du guide de tige de poussée (610) pour former une marche dans la direction radiale du guide de tige de poussée (610), et une rainure de réception (621) correspondant à la marche est formée au niveau d'une circonférence intérieure du couvercle de guide de tige de poussée (620).

2. Structure de couplage d'un guide de tige de poussée (610) et d'un couvercle de guide de tige de poussée (620) d'une chambre de frein pour un véhicule selon la revendication 1, dans laquelle le guide de tige de poussée (610) est fabriqué en matière plastique, et des extrémités de la paire de demi-éléments (611, 612) sont moulées par injection d'un seul tenant pour former l'articulation.
